(19) Europäisches Patentamt
European Patent Office
Office européen des brevets

(11) **EP 3 017 931 B1**

(12) **EUROPEAN PATENT SPECIFICATION**

(45) Date of publication and mention
of the grant of the patent:
**16.12.2020 Bulletin 2020/51**

(51) Int Cl.:
**B29C 65/36** (2006.01)    B29K 101/10 (2006.01)
**B29K 105/06** (2006.01)    B29K 105/08 (2006.01)
**B29K 105/12** (2006.01)    B29K 105/16 (2006.01)

(21) Application number: **15193561.6**

(22) Date of filing: **06.11.2015**

(54) **INDUCTION WELDING METHOD FOR ELECTRICALLY CONDUCTING COMPOSITE MATERIALS HAVING A THERMOSETTING MATRIX**

INDUKTIONSSCHWEISSVERFAHREN FÜR ELEKTRISCH LEITENDE VERBUNDSTOFFMATERIALIEN MIT EINER WÄRMEHÄRTENDEN MATRIX

PROCÉDÉ DE SOUDAGE PAR INDUCTION DE MATÉRIAUX COMPOSITES ÉLECTROCONDUCTEURS AYANT UNE MATRICE THERMODURCISSABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2014 IT TO20140923**

(43) Date of publication of application:
**11.05.2016 Bulletin 2016/19**

(73) Proprietor: **Centro di Progettazione Design & Tecnologie dei Materiali
72100 Brindisi (IT)**

(72) Inventors:
• **PAPPADA', Silvio
72100 Brindisi (IT)**
• **SALOMI, Andrea
72100 Brindisi (IT)**
• **BARONE, Luigi
73100 Lecce (IT)**

• **COFANO, Giuseppe
74122 Taranto (IT)**
• **MAFFEZZOLI, Alfonso
73100 Lecce (IT)**

(74) Representative: **Studio Torta S.p.A.
Via Viotti, 9
10121 Torino (IT)**

(56) References cited:
**EP-A1- 0 495 655          EP-A1- 2 801 472
DE-A1-102012 100 620    US-A1- 2002 113 066
US-A1- 2011 240 200**

• **Alan R. Wedgewood; Patrice E. Hardy: "Induction Welding of Thermoset Composite Adherends Using Thermoplastic Interlayers and Susceptors" In: "28th International SAMPE Technical Conference", 7 November 1996 (1996-11-07), XP009185042, pages 850-861, * the whole document ***

**Description**

The present invention relates to an induction welding method of adherends at least one which is an electrically conducting composite material having a thermosetting matrix.

Composite materials having a thermosetting matrix can be joined by means of an adhesive. However, such joints do not have particularly good mechanical properties, specifically as regards their peeling strength, owing to the presence of a macroscopic interface defined between the adherends and the adhesive. Moreover, the surfaces on which the adhesive is to be applied must be prepared beforehand, thus increasing the time and costs involved in such joining method. It is also difficult to control the application of the adhesive material with precision and, in particular, to apply the adhesive evenly and over the entire surface. Improper adhesive application, specifically unintentional unevenness in the application of the adhesive, negatively impacts the mechanical properties of the glued joint and is not easy to detect during non-destructive testing.

Induction welding of composite materials with a thermosetting matrix is not common in industrial applications, mainly because it is difficult to control the welding temperature. Relatively large areas of the thermosetting matrix are often overheated and this reduces the mechanical properties of the welded joint.

Moreover, a matrix overheating can negatively impact the appearance of the joint and make it necessary to perform lengthy and expensive non-destructive tests to check the mechanical properties of the welded joint.

United States patent application US2011/240200A1 discloses a method of forming a joint between a first component and a second component, the first component comprising a plurality of layers of fibres impregnated with a thermosetting matrix. A welding interface element is provided with an array of pointed prongs. One or more of the layers of fibres are penetrated with the prongs, either before or after the fibres have been impregnated with the thermosetting matrix. The first component is cured by heating the thermosetting matrix after the prongs have been embedded. A thermoplastic weld is formed between the second component and the welding interface element.

German patent application DE102012100620A1 discloses a method for induction welding of fiber reinforced composites with a thermoplastic matrix material, the method making use of an inductor for heating the joining zone of the components to be welded and of a cooling device for cooling the components.

An article of the 28th International SAMPE Technical Conference, of the authors Alan R. Wedgewood and Patrice E. Hardy, published on 1996 and titled "Induction Welding of Thermoset Composite Adherends Using Thermoplastic Interlayers and Susceptors", discloses a method for induction welding thermoset composite laminates using a combination of thermoplastic interlayers and susceptors to join "T" sections to fiat laminates. A thermoplastic interlayer is first co-cured to the thermoset laminate surfaces to be joined. A thermoplastic impregnated metallic susceptor is placed between the laminate surfaces to be joined. Power is supplied to a work coil which generates an alternating magnetic field. Current induced by the magnetic field heats the weld line which then fuses the resin rich layers together. Joint quality, as assessed by NDI, photomicrographs and pull-offstrength determinations, have shown that high quality joints can be readily produced.

United States patent application US2002/113066A1 discloses a new polymer induction bonding technology to weld, forge, bond or set polymer materials, in particular a controlled-temperature induction heating of polymeric materials by mixing ferromagnetic particles in the polymer to be heated. Temperature control is obtained by selecting ferromagnetic particles with a specific Curie temperature. The ferromagnetic particles will heat up in an induction field, through hysteresis losses, until they reach their Curie temperature. At that point, heat generation through hysteresis loss ceases.

European patent application EP0495655A1 discloses a method of joining members that comprises applying a thermoplastic coating to the surface of at least one of the members. The coating is applied by applying a solution onto the surface and the two members are joined via their coatings. The method is particularly suitable for joining dissimilar materials, e.g. metals and thermoplastics.

The need is therefore felt to improve the method for induction welding of composite materials having a thermosetting matrix.

The purpose of the present invention is achieved with an induction welding method as claimed in claim 1.

The invention will now be described with reference to the accompanying drawings, illustrating some non-limiting embodiments thereof and referring:

- Figure 1 to a schematic cross-sectional view of a step in the production of an adherend for a welding method according to the present invention;
- Figure 2 to a schematic view of a preparatory step performed after that shown in figure 1;
- Figure 3 to a schematic cross-sectional view of an alternative step in the production of an adherend for a welding method according to the present invention;
- Figure 4 to a schematic view of a preparatory step performed after those shown, respectively, in figure 2 and figure 3;
- Figure 5 to a schematic perspective view of a welding machine for implementing the method according to the present invention; and

- Figure 6 to a schematic plan view of a thermocouple device during a calibration step of the welding method;
- Figure 7 to a micrograph of a welded joint between adherends having an epoxy matrix and PVB thermoplastic interface material.

A composite material having a thermosetting matrix 1 for an induction welding method according to the present invention must be electrically conducting. A composite material 1 comprises a filler 2 and a matrix 3. An electrically conducting composite material can be produced in a number of ways: by combining a filler having electrical conduction properties and a matrix having electrically insulating or inert properties or by using two or more fillers with different electrical conduction properties or by using fillers in which two or more different materials are combined to obtain the desired electrical conduction properties. The property of electrical conduction regards the filler 2 before being combined with the matrix. With reference to the two adherends, only one of the two needs to be electrically conducting, although both adherends could also be electrically conducting. The heat for welding is generated by the Joule effect induced by parasitic currents in the filler 2 by means of a variable magnetic field.

The filler 2 of the composite material 1 may comprise both particles having different grain sizes, and fibres. The fibres may be in bulk or woven form. Fibres in bulk form may be long or short. If woven, the fibres are long enough to be woven.

The thermosetting matrix 3 is a polymeric material with a cure temperature that is preferably indicated in the material's technical sheet.

The welding method according to the present invention envisages the use of an interface material 4 comprising a different material from that of the thermosetting matrix 3 of at least one of the adherends, preferably of both.

The interface material 4 may be monolayer or multilayer, monocomponent or also a composite material. The interface material 4 may be a film or made of fibres, even of different materials, preferably woven or nonwoven fabric. In the former case the film is substantially continuous so as to define a uniform area that will be heated even only partially during the welding process. In the case of woven or nonwoven fabrics, the high level of surface roughness and/or porosity also comprising holes through the thickness of the material facilitate maximum adhesion.

According to the present invention the interface material 4 comprises a thermoplastic material.

A thermoplastic material is a polymer capable of reversibly changing from a solid condition to a deformable condition when subjected to a softening or melting temperature.

The interface material 4 has relatively good mechanical properties, specifically tensile strength and elasticity modulus at ambient temperature (24 degrees). The welded joint thus has good mechanical properties. Preferably the elasticity modulus is greater than or equal to 0.2 GPa, and the tensile strength is greater than or equal to 10 MPa. If the interface material 4 comprises a monolayer film, a woven or nonwoven fabric, the values of the mechanical properties refer to the bulk material of the film, or of the woven or nonwoven fabric. If the interface material 4 is a multilayer or composite material, the aforesaid elasticity modulus and tensile strength values refer in the former case to those of the layer with the lowest mechanical properties and in the latter case to those of the matrix.

A method known in the prior art consists of joining a thermoplastic material and a thermosetting material by applying pressure and heat, to facilitate the diffusion of the thermoplastic material in the thermosetting material, making the materials penetrate one another so that an interface between the two materials disappears, at least macroscopically, a phenomenon that does not occur when a thermoplastic material and a thermosetting material are joined by means of an adhesive.

According to the present invention, the term 'diffusion' refers to a process during which the thermoplastic material penetrates the thermosetting material. Following such penetration there is a transition area 5 having a hybrid microstructure in which there is a gradual transition from the thermosetting material to the thermoplastic material. After diffusion during the curing of the adherend, the interface material 4 is physically bonded to the thermosetting matrix and cannot be removed without damaging said adherend and/or causing macroscopic tears in the matrix 3 and/or in the thermoplastic material. The depth of the transition area 5 depends on the affinity between the two polymers and the process conditions under which the diffusion takes place.

The interface material 4 is substantially monodimensional, for example a strip, or substantially two-dimensional, for example a tape or a band. In the latter case, the interface material 4 may cover an entire face of a panel adherend and, during welding, only a portion of the interface material 4 is heated to form the joint.

In this way, the interface material 4 has a perimeter inside which welding will be performed and the adherends can be visually inspected before welding and the preparatory steps can easily be automated. This is not the case when the adherends are joined using adhesive liquid or paste.

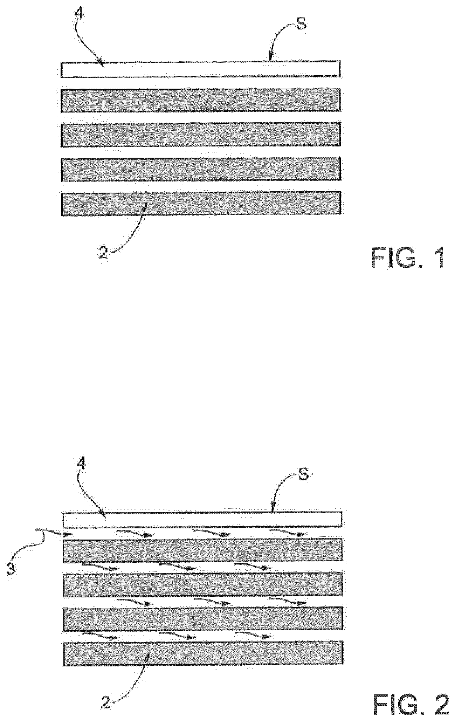

In a pre-welding preparatory step, the interface material 4 may initially be cold mixed with the dry filler used to produce the adherends. This can be done for example by first bringing the interface material 4 into contact with the filler 2 (figure 1) and then injecting the thermosetting matrix 3 so that the interface material 4 is also partially incorporated into the matrix (figure 2). Preferably, in this case, the interface material 4 is porous, for example a fabric, to facilitate its anchorage to the thermosetting matrix 3. This alternative process is for producing components made of composite materials using infusion or resin transfer moulding technology. The filler 2 impregnated with thermosetting matrix 3 is subsequently heated until the matrix reaches the cure temperature (Tc) and is thus cured so that the three-dimensional form of the adherend is defined. Curing of the thermosetting matrix 3 may also occur at ambient temperature if the thermosetting matrix of the type that cures at ambient temperature (approximately 24 degrees).

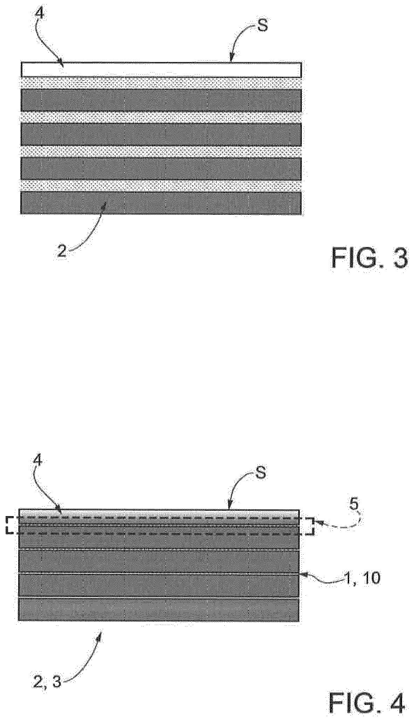

Alternatively, the filler 2 is already incorporated into the thermosetting matrix 3, that is to say, the adherend is a prepreg (figure 3), and the pre-welding preparatory step consists of applying the interface material 4 onto the thermosetting matrix 3 of the adherend. In this condition, the adherend can be shaped and thus copy the form of a mould using by way of example but not limited to one of the following methods: compression moulding (including manually), vacuum bag forming inside or outside an autoclave, diaphragm forming.

Next, the cold joint between the adherend and the interface material 4 is heated to the cure temperature (Tc, indicated in the data sheet) of the thermosetting matrix 3 which cures so that the shape of the adherend becomes definitive and, specifically, is defined by the mould. In this way the interface material 4 is intimately fixed to the adherend and a resting state of the interface material 4 is defined.

In both of these alternative processes, curing is achieved by heating but may also be achieved through the addition of a catalyst.

Furthermore, in both of these alternative processes, during the curing step the interface material 4 tends to penetrate and/or solubilize in the matrix 3 of the adherend. This results in the macroscopic disappearance of the interface surface between the matrix 3 and the material 4, defining the transition area 5 in which the material of the matrix 3 gradually becomes the interface material 4 in the direction of the thickness of the adherend (figure 4). In the transition area 5 the interface material 4 penetrates into the matrix 3 and an effective anchorage between the thermosetting matrix 3 and the thermoplastic material of the interface material 4 is achieved. To improve the mechanical properties of the welded joint, diffusion into the transition area 5 is accomplished through the selection of the interface material 4 with the thermosetting matrix 3, appropriate dimensioning of the thickness of the interface material 4 and selection of the process parameters during curing, essentially pressure and temperature, in the preparatory steps shown in figures 1, 2, 3 after which the interface material 4 is partially incorporated into and penetrates the matrix 3.

Preferably, the interface material 4 has a melting or softening temperature Ts equal to or just a few tens of degrees lower than the glass transition temperature Tg of the thermosetting matrix 3 after curing. As a general rule, the glass transition temperature Tg of the composite material 1 after curing is not more than 40° higher than the cure temperature Tc of the thermosetting matrix 3. During welding, the thermosetting matrix 3 must not exceed the glass transition temperature $T_g$ by too much (even in a limited portion of the adherend) to prevent any degradation of said matrix. This can have a significant negative impact on the mechanical properties of the welded joint and, in any case, such degradation can only be assessed by performing destructive tests. It is however possible to select thermoplastic materials with a melting or softening temperature Ts that is higher than the Tg of the thermosetting matrix 3, to cure the thermosetting matrix 3 so that the thermoplastic material is diffused in the matrix, and to perform welding at a temperature that is not higher than the Tg of the thermosetting matrix 3. In that case though the welding process is less easy to control.

Moreover, it has been found that the melting or softening temperature of the interface material 4 may be affected by the process of diffusion during the preparatory and curing steps illustrated in figures 1, 2 and 3. In particular, the melting or softening temperature of a thermoplastic material tends to fall after being diffused in a thermosetting material if the melting or softening temperature of the thermoplastic material prior to diffusion is higher than the $T_g$ of the thermosetting material. Thus, within certain limits, it is possible to achieve a penetration between the thermoplastic material and a thermosetting matrix 3 during the curing process even when using thermoplastic materials with a Ts that is higher than the Tg of the matrix.

The melting temperature Ts is the temperature at which the crystalline portion of a crystalline thermoplastic polymer melts, resulting in a reduction in the viscosity of the material by several orders of magnitude.

The softening temperature Ts is the temperature at which a thermoplastic polymer having an amorphous microstructure tends to flow more easily owing to a reduction in its viscosity by several orders of magnitude.

Preferably, to foster an appropriate and not excessive penetration during curing of the thermosetting matrix, the interface material 4 must have a minimum softening and/or melting temperature that is higher than or equal to Tc-40°.

It is important to control diffusion during the adherend curing step in order to obtain a welded joint with good mechanical properties. Hansen solubility parameters (polarity, dispersion and hydrogen bonding) have been found to be useful for predicting the propensity of a thermoplastic material and a thermosetting material to penetrate one another during curing of the latter. In particular, it has been found that the best mechanical properties are obtained when the interaction radius $R_0$ (radius of the solubility sphere calculated experimentally) is close to the distance $R_a$ in the Hansen space, calculated based on the partial solubility parameters of the two materials:

$$(Ra)^2 = 4(\delta_{D2} - \delta_{D1})^2 + (\delta_{P2} - \delta_{P1})^2 + (\delta_{H2} - \delta_{H1})^2$$

in which 'deltaD' is the energy associated with dispersion forces;
'deltaP' is the energy associated with the dipole intermolecular forces; and
'deltaH' is the energy associated with the hydrogen bonds.

In other words, still with reference to Hansen's theory, given the parameter RED=$R_a$/$R_0$, it has been found that the best conditions for diffusion in order to achieve a welded joint with acceptable mechanical properties are obtained when 0.4<=RED<=1.2. This range is particularly advantageous for defining a thermoplastic material capable of correct diffusion within a range of +/-15% of the pressure indicated in the data sheet of the thermosetting matrix 3 and referring to the curing conditions, preferably substantially at the pressure indicated in the data sheet of the thermosetting matrix 3 and referring to the curing conditions. At these pressures, RED values of less than 0.4 would result in excessive diffusion of the thermoplastic material in the thermosetting material, with the possibility of there not being enough thermoplastic material on the joining surface of the adherend to accomplish said joint. RED values of more than 1.2 imply low affinity between the thermoplastic material and the thermosetting material, and thus little penetration between the two materials. Excessive diffusion of the thermoplastic material in the thermosetting matrix can alter the mechanical properties of the latter to a non-negligible extent.

Acceptable mechanical properties can also be achieved even with a medium-to-low affinity (RED>1.2) between the thermosetting matrix and the interface layer. This can be at least partially offset by increasing the compaction pressure during the composite material consolidation step (for example, the pressure can reach or exceed 20 in the preparatory step).

Lastly, acceptable mechanical properties can also be obtained with RED<0.4 when the diffusion of the thermoplastic material in the thermosetting material results in an improvement in the relevant mechanical properties of the latter. In that case the curing process parameters can be changed (for instance, the pressure can be reduced) and the thickness of the thermoplastic material can be modified in order to have enough thermoplastic material for welding. However, for some applications the presence of an excessive amount of diffused thermoplastic material in the thermosetting material is not desirable.

After selecting the thermosetting matrix 3 and the thermoplastic material and after curing the thermosetting matrix 3 during which the thermoplastic material is diffused in the matrix 3, welding is performed by heating the interface material 4 to a temperature that is lower than the Tg of the thermosetting matrix and such as to heat the thermoplastic material to make the joint.

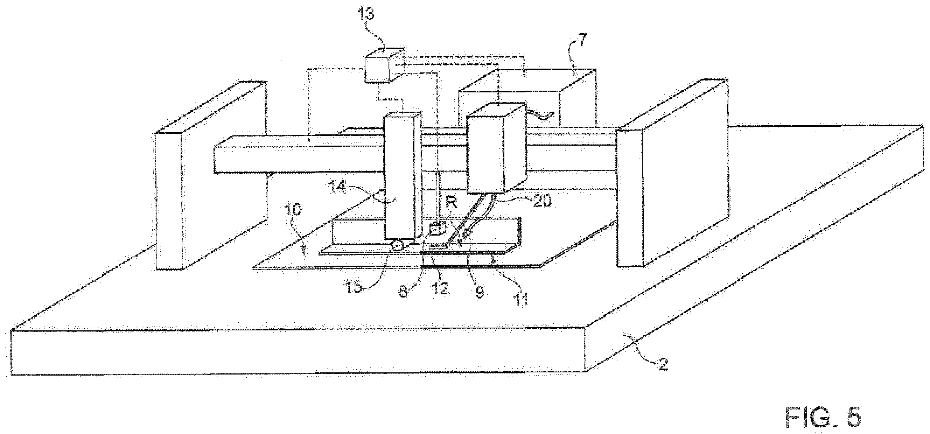

Moreover, the temperature in the area between the adherends is controlled by means of an electromagnetic coil 12 (figure 5) and a source of gas under pressure 7, for example compressed air, which directs a flow to a nozzle 9 in order to deliver a flow of cooling gas. Moreover, the surface temperature of the adherends is monitored by means of a sensor 8, preferably a contactless sensor such as an infra-red sensor, and a control unit 13 which controls the cooling and/or the current for feeding the coil 12 in a closed-loop system. The control unit 13 controls cooling by adjusting the current for feeding the coil 12, preferably intermittently through work cycles, and/or by adjusting the position of the nozzle 9 in space, and/or by adjusting the flow of cooling gas delivered through the nozzle 9, and/or by adjusting the temperature of the cooling gas delivered through the nozzle 9. Preferably the current for feeding the coil 12 and one or more parameters of the cooling gas are adjusted together. Preferably, the absolute position of the nozzle 9 can be adjusted automatically by means of a movable head 16 controlled by the control unit 13. Moreover, the nozzle 9 is carried by a support structure 20, the position of which can be adjusted manually before welding starts and is subsequently maintained throughout the welding process. In particular, the relative position of the nozzle 9 with respect to the coil 12 can be adjusted by means of the support structure 20. Moreover, the support structure 20 may be carried by the movable head 16. The coil 12 is also carried by the head 16 and, preferably, the coil 12 and the nozzle 9 are carried by a support 18 operated by the movable head 16. Preferably, the movable head 16 moves about 3 axes, for example 3 Cartesian axes.

During welding, a first adherend 10 on which the interface material 4 has already been applied, is brought into contact with at least a second adherend 11. The welding area is a three-dimensional volume within the thickness of the adherends and comprises or, specifically, incorporates, a contact surface S between the interface material 4 and the second adherend 11. The temperature in the welding area reaches a value such as to permit welding of the interface material 4 with the thermoplastic material of the second adherend. The second adherend 11 may for example be a thermoplastic material or have the same structure as the adherend 10, that is to say, prepared according to the preparatory steps illustrated in figures 1, 2 and 3 and may have, in turn, a contact surface S defined by a different material from that of its thermosetting matrix that comes into contact with the contact surface S of the other adherend.

The contact surface S is hidden between the adherends 10, 11 and the coil 12 faces a cooled surface R of one of the adherends, in the example the adherend 11. The cooling nozzle 9 is preferably arranged on the same side of the coil 12 as the adherends 10, 11 and the cooled surface R.

According to the method of the present invention, the interface material 4 in the welding zone can be heated to a temperature that is higher than that of the cooled surface R (figure 5). In particular, the cooled surface R is kept at a maximum temperature equal to the Tg (glass transition temperature after curing), preferably at no more than the Tc, of the thermosetting matrix 3 and, after the selection described in the previous paragraphs, at below or equal to the melting or softening temperature Ts of the interface material 4. This is achieved by means of a closed-loop control system which keeps the temperature measured by the sensor 8 below a pre-set threshold value. The closed-loop control system, to keep the temperature below the threshold value, controls one or more of the following parameters: the current for feeding the coil 12 and/or the frequency of the supply current pulses for feeding the coil 12 with work cycles, and/or the cooling gas flow, and/or the cooling gas temperature and/or the relative position between the coil 12 and the nozzle 9.

The flow and/or the temperature of the cooling gas are respective parameters of the cooling of the surface R. A further cooling parameter may also be defined by the position of the nozzle 9 which may be adjustable with respect to the coil 12 and controlled by the control unit 13. In the predefined condition the feed current and/or one or more cooling parameters may be constant or vary according to a periodic work cycle.

Preferably, to facilitate the adhesion of the adherends 10, 11 in the welding area, the welding method comprises a compaction step, for example by way of a compactor 14 preferably having a roller 15 that rests on at least one of the adherends, in the example the second adherend 11, and compresses the welding area preferably on the basis of a command received from the control unit 13. The pressure applied on the welding area facilitates the penetration between the thermoplastic interface material 4 of the two adherends or of the interface material 4 and the thermosetting matrix of the second adherend. In use, the roller 15 applies pressure in an area that is at a distance from a head of the coil 12 so that, in said area, the thermoplastic material 4 cools down with respect to the maximum temperature reached under the action of the coil 12. At a given point in time, the area in which the thermoplastic material 4 reaches the maximum temperature is closer to the head of the coil 12 than the area of action of the compactor 14.

Advantageously, having defined a feeding direction of the coil 12 along the welding area, the nozzle 9 cools an area in front of the coil 12 with respect to the feeding direction while welding is performed. This makes it possible to reduce the mechanical interference between the welding machine and the adherends when the latter have a complex three-dimensional shape and in-line welding is performed. In figure 5 the feeding direction is from left to right. When the compaction step is performed, the compactor 14 applies pressure on the adherends 10, 11 behind the coil 12 with respect to the feeding direction.

During the welding process according to the present invention, the perimeter of interface material 4 substantially maintains its geometry as defined at the end of the preparatory step as shown in figures 1, 2 and 3.

In the above description the interface material 4 is a monocomponent and monolayer material. However, it is understood that, if the interface material is a multilayer material, the considerations applicable to the monocomponent material refer to a last thermoplastic layer of the multilayer material arranged so as to come into contact with the matrix of the adherend in the preparatory step.

According to a preferred embodiment of the method to which the present invention refers, before performing automatic welding in which the control unit 13 controls the current for feeding the coil 12 and one or more of the cooling gas parameters based on the temperature measured by the sensor 8, a calibration step is performed. The calibration step is, in any case, performed after the step of preparing the adherends. During the calibration step welding is performed on two adherends fitted with instruments comprising contact temperature sensors arranged between the interface material 4 and one or both of the adherends 10, 11. In this way a temperature is read on the interface material 4 and/or on the contact surface.

Using the contact temperature sensors, the stored data are mapped in order to establish a correspondence between the current for feeding the coil 12, a cooling parameter, for example the flow and/or temperature of the gas after setting the position of the nozzle 9, and the temperature measured by the sensor 8. In particular the system stores the combination of the predefined current state for feeding, for example a predefined work cycle, and for cooling in which the contact temperature sensors measure the temperature during welding:

$$T <= Tc + 40°$$

and, at the same time, the maximum temperature measured by the sensor 8 is equal to or lower than the glass transition temperature of the matrix 3, preferably equal to or lower than the cure temperature of the matrix 3.

This state is subsequently reproduced to perform automated welding on adherends 10, 11 that are non-instrumented but identical in shape to those used during the calibration step.

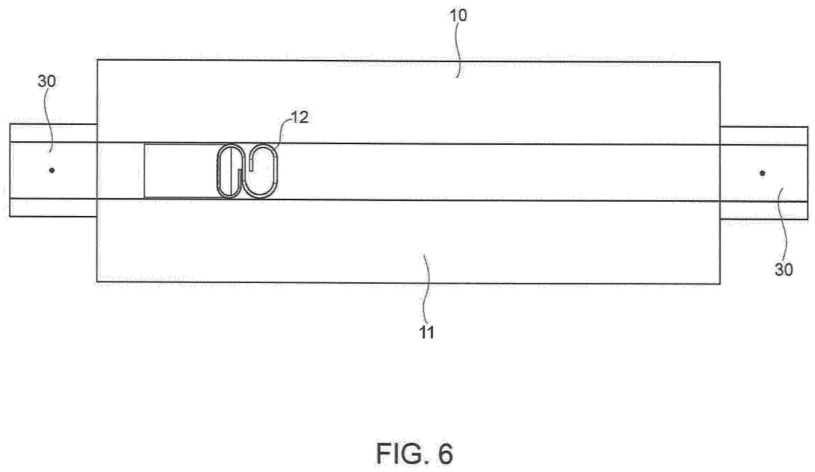

Another way of performing the calibration step is to provide "sacrificial" joint areas in which contact temperature sensors are inserted, as illustrated in Figure 6. In figure 6, reference numeral 30 indicates an area fitted with the contact temperature sensors that, after welding and storing the data, is cut off the adherends 10, 12 so that the welded part is not discarded.

The calibration step described above may also be performed or supported virtually using finite element analysis software and appropriately developed and validated theoretical models. In such numerical models the temperature range in the interface area is calculated by providing process input data (current, coil shape, coil distance, extent of cooling) and data relating to the material (electrical, thermal conductivity, etc.).

During calibration and automated welding the sensor 8 measures temperature data and, in particular, the maximum temperature of the surface R. When the sensor 8 is a thermal camera, a two-dimensional map of the temperature data is obtained. According to the method of the present invention said maximum temperature of the surface R must be equal to or lower than the glass transition temperature of the thermosetting matrix 3. Preferably, said temperature must be lower than the Tc of the thermosetting matrix 3.

When two adherends with thermosetting matrices that have different Tg are welded, the control unit 13 maintains the temperature below the Tg of the thermosetting material facing the coil 12.

The control unit 13 can be programmed to automatically perform continuous or spot welding. In that respect it should be noted that, since the purpose of the coil 12 is to weld the interface material 4, the welding conditions differ from those to obtain diffusion during the preparatory step. In particular, during welding the temperature for creating the joint using the interface material 4, by way of electromagnetic induction heating, is reached much more quickly than during the curing process. For example, the welding speed is at least 0.1 mm/sec up to 50 mm/sec, and varies depending on the type of adherends to be welded (lamination sequence, thickness, type of matrix). The welding speed is one of the outcomes of the cycle calibration and setup process described previously. The pressure applied by the compactor does not usually exceed 20 bar (the pressure needed to allow the thermoplastic matrix to flow, which varies as a function of the viscosity of said matrix).

EXAMPLES

In all of the following examples, the preparatory step consisted of incorporating the interface material 4 as illustrated in figure 3 for a prepreg. During curing, performed at 180°, hydrostatic pressure was applied at 3 bar to compress the interface material. The matrix 3 of both adherends is an epoxy material ($T_g = T_c + 30°C = 210°C$) and the filler 2 is a carbon fibre fabric. The material used in the examples is an A193P prepreg marketed by Hexcel with 3501-6 epoxy resin. In all the examples, the temperature of the cooled surface R is controlled by cooling and is lower than the temperature reached by the thermoplastic material. In all the examples the welding speed is 2 mm/second.

Example 1 of welding: interface material 4 PEI monolayer ('Ultem 1000' marketed by Sabic, Tg 217 °C) thickness 0.125 mm. RED=1.1 T=210° [temperature reached in the thermoplastic material]. The welded joint is at the minimum acceptable level and has a single lap shear strength of 10 MPa: the welding temperature is low in relation to the Tg of the PEI and the PEI flow is only just sufficient to complete welding;

Example 2 of welding: interface material 4 PES monolayer ('CE 21' marketed by Griltex, Ts 100 °C) thickness 0.100 mm. RED=0.31 but welding could not be performed as the thermoplastic was completely solubilized by the thermosetting material. Given the good propensity for penetration, the use of thicker interface material could contaminate the matrix and affect the repeatability of the mechanical properties of the latter;

Example 3 of welding: interface material 4 PVB monolayer ('Mowital-' marketed by Kuraray, Ts 130-140 °C) thickness 0.250 mm. RED=1.12 T=210° [temperature reached in the thermoplastic material]. Welding is good with a single lap shear strength of 22.4 MPa. The thermoplastic material was partially diffused in the preparatory step and was able to flow during welding resulting in a joint with good mechanical properties;

Example 4 of welding: interface material 4 PA12 monolayer ('CT 101' marketed by Griltex , Ts 175-180 °C) thickness 0.090 mm. RED=0.67 Twelding=210° [temperature reached in the thermoplastic material]. Welding quality was fairly good with a single lap shear strength of 19.16 MPa;

Example 5 of welding: interface material 4 PC monolayer ('Lexan' marketed by Griltex, Tg 153 °C) thickness 0.250 mm. RED=0.42 Twelding=210° [temperature reached in the thermoplastic material]. Welding quality is good with a single lap shear strength of 12.54 MPa.

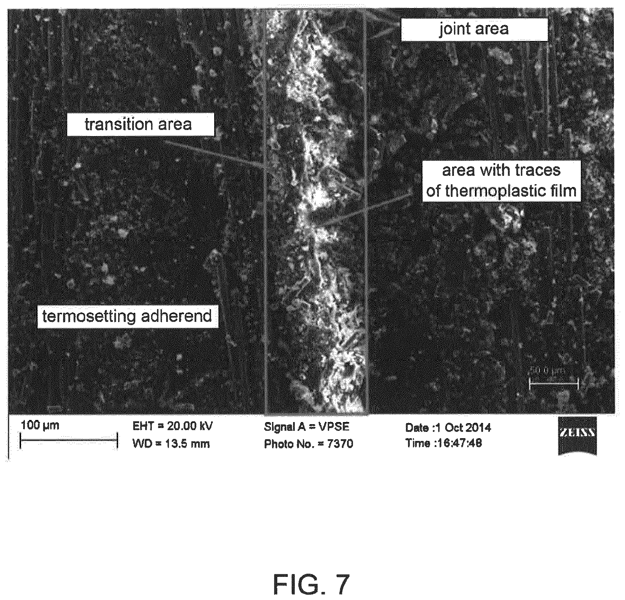

It is correct to say that for good quality welding the thickness of the interface material 4 on the adherends is preferably between 75 and 300 $\mu$m. The aspects described above are visible in the micrograph in Figure 7 of a joint on an epoxy-carbon PVB thermoplastic film adherend, i.e.:

- Transition area in which the epoxy matrix solubilizes the PVB (light grey area);
- Area in which only PVB is present (white area);
- Epoxy adherend (cured grey area).

The method according to the present invention achieves the following advantages.

With the welding method according to the present invention, continuous welding can be performed by an automated procedure with closed-loop control, and is thus repeatable.

The use of a solid interface material 4, that is to say, a monolayer, or multilayer, or fabric material, means that checks can be performed easily during pre-welding steps to reduce the number of faulty joints. In particular, defects due to notable non-uniformity of the interface material 4 can be considerably reduced or eliminated as these can be detected before welding starts. When necessary, if an interface material 4 is considered to be defective, it can be replaced before welding starts.

It has been found that with the alternative process according to the present invention it is possible to weld large thicknesses, that is to say, of more than 4 mm, with a feed of more than 1 mm per second. The possibility of optimising the distribution of heat in the joint also means the joining process can be fully automated, with significant advantages in terms of costs and performance. With the conventional welding process, the high temperatures reached in areas of the joint far away from the joining interface resulted in deterioration of the matrix of the adherends that was difficult to quantify. This has effectively prevented the use of induction welding of thermosetting materials in industrial applications.

To sum up, with the alternative process according to the present invention, it is possible to obtain good mechanical properties of the joint with a single lap shear strength of at least 10 MPa and, advantageously, of 15 MPa, in a controlled and automated manner.

Lastly it is clear that modifications and variations may be made to the welding method described and illustrated herein without departing from the scope of the present invention, as set forth in the appended claims.

## Claims

1. An induction welding method of two adherends (10, 11) at least one of which comprises an electrically conducting composite material having a thermosetting matrix (3) and an interface material (4) comprising a layer of thermoplastic material defining a contact surface (S), the layer of thermoplastic material being joined to the thermosetting matrix (3) during a pre-welding step by applying pressure and heat in order to facilitate the diffusion of the thermoplastic material in the thermosetting matrix (3); the method comprising the steps of:

    - arranging the contact surface (S) of an adherend (10) onto a thermoplastic material of the other adherend (11);
    - energizing a coil (12) facing a further surface (R) of one of the adherends (10, 11) so as to heat the interface material (4) to a first temperature;

    and **characterized in that** it comprises the step of:

    - controlling the cooling of the further surface (R) so that a second temperature of the further surface (R) is lower than the first temperature while the coil (12) is energized.

2. The method according to claim 1, **characterized in that** the thermoplastic material has a melting or softening temperature (Ts) which satisfies the following relation with respect to the cure temperature (Tc) of the thermosetting matrix (3):

$$Tc\text{-}40° <= Ts,$$

    wherein Tc is the cure temperature of the thermosetting matrix and Ts is the melting or softening temperature of the thermoplastic material.

3. The method according to one of claims 1 or 2, **characterized in that** a ratio between an interaction radius (R0), calculated experimentally, and a distance (Ra) in Hansen space, calculated based on the partial solubility parameters of the thermosetting matrix (3) and of the thermoplastic material, satisfies the following relation:

$$RED = R_a/R_0 > 0.4,$$

    wherein RED is the ratio, Ra is the distance in the Hansen space and R0 is the interaction radius.

4. The method according to any one of the preceding claims, **characterized in that** it further comprises the step of applying by way of a compactor (14, 15) a pressure in a first area of said further surface (R) and **in that** the step of controlling the cooling comprises the step of directing a flow of cooling gas to a second area of said further surface (R) arranged on the opposite side of the first area with respect to the coil (12) in a feeding direction while the welding is performed.

5. The method according to any one of the preceding claims, **characterized in that** the step of controlling the cooling comprises the step of contactless detecting a surface temperature of said further surface (R).

6. The method according to any one of the preceding claims, **characterized in that** the energizing step is such that the contact surface (S) is heated to a temperature not higher than the glass transition temperature of the matrix during welding.

7. The method according to any one of the preceding claims, **characterized in that** the interface material (4) has an elasticity modulus >= 0.2 GPa and a tensile strength >= 10MPa.

8. The method according to claim 7, **characterized in that** the thermosetting matrix comprises an epoxy material and the thermoplastic material comprises a PVB and/or a PA12 and/or a PC and/or a PEI.

9. The method according to any one of the preceding claims, comprising a calibration step wherein, in at least a first predefined current state for feeding the coil (12) and in a second predefined current state for cooling said further surface (R), the first temperature at the contact surface (S) and the second temperature relevant to said further surface (R) are stored, and wherein the first and the second temperature are associated with the first and with the second state when the first temperature is lower than the second temperature if the adherends are joined.

10. The method according to claim 9, **characterized in that** the first temperature data is measured by at least one thermocouple.


**Patentansprüche**

1. Verfahren zum Induktionsschweißen von zwei Fügeteilen (10,11), wobei mindestens eines von diesen ein elektrisch leitendes Verbundmaterial umfasst, das eine wärmehärtbare Matrix (3) und ein Grenzflächenmaterial (4) aufweist, umfassend eine Schicht aus thermoplastischem Material, die eine Kontaktfläche (S) definiert, wobei die Schicht aus thermoplastischem Material mit der wärmehärtbaren Matrix (3), während eines Verfahrensschritts vor dem Schweißen, durch Anwendung von Druck und Wärme verbunden wird, um die Diffusion des thermoplastischen Materials in die wärmehärtbare Matrix (3) zu vereinfachen; wobei das Verfahren die folgenden Schritte umfasst:

- Anordnen der Kontaktfläche (S) eines Fügeteils (10) auf einem thermoplastischen Material des anderen Fügeteils (11);
- Anregung einer Spule (12), die einer weiteren Oberfläche (R) von einem der Fügeteile (10,11) zugewandt ist, so dass das Grenzflächenmaterial (4) auf eine erste Temperatur erwärmt wird; und

**dadurch gekennzeichnet, dass** das Verfahren die folgenden Schritte umfasst:

- Steuerung der Kühlung der weiteren Oberfläche (R), so dass eine zweite Temperatur der weiteren Oberfläche (R) niedriger ist als die erste Temperatur, während die Spule (12) angeregt wird.

2. Verfahren nach Anspruch 1, **dadurch gekennzeichnet, dass** das thermoplastische Material eine Schmelz- oder Erweichungstemperatur (Ts) hat, die die folgende Beziehung in Bezug auf die Aushärtungstemperatur (Tc) der wärmehärtbaren Matrix (3) erfüllt:

$$Tc-40°<=Ts,$$

wobei Tc die Aushärtungstemperatur der wärmehärtbaren Matrix und Ts die Schmelz- oder Erweichungstemperatur des thermoplastischen Materials ist.

3. Verfahren nach einem der Ansprüche 1 oder 2, **dadurch gekennzeichnet, dass** ein Verhältnis zwischen einem Wechselwirkungsradius (RO), der experimentell berechnet wurde, und einem Abstand (Ra) im Hansen-Raum, der auf der Grundlage der partiellen Löslichkeitsparameter der wärmehärtbaren Matrix (3) und des thermoplastischen Material berechnet wurde, die folgende Beziehung erfüllt: *RED = Ra/RO > 0.4*, wobei RED das Verhältnis, Ra der Abstand im Hansen-Raum und RO der Wechselwirkungsradius ist.

4. Verfahren nach einem der vorhergehenden Ansprüche, **dadurch gekennzeichnet, dass** es weiterhin den Schritt des Aufbringens eines Drucks mittels eines Verdichters (14,15) in einem ersten Bereich der weiteren Oberfläche (R) umfasst und dass der Schritt des Steuerns der Kühlung den Schritt des Ausrichtens einen Kühlgasstrom zu einem zweiten Bereich der weiteren Oberfläche (R) umfasst, der auf der gegenüberliegenden Seite des ersten Bereichs in Bezug auf die Spule (12) in einer Vorschubrichtung angeordnet ist, während das Schweißen durchgeführt wird.

5. Verfahren nach einem der vorhergehenden Ansprüche, **dadurch gekennzeichnet, dass** der Schritt des Steuerns der Kühlung den Schritt der kontaktlosen Erfassung einer Oberflächentemperatur der weiteren Oberfläche (R) umfasst.

6. Verfahren nach einem der vorhergehenden Ansprüche, **dadurch gekennzeichnet, dass** der Schritt der Anregung derart ist, dass die Kontaktfläche (S) auf eine Temperatur erhitzt wird, die nicht höher ist als die Transformationstemperatur der Matrix während des Schweißens.

7. Verfahren nach einem der vorhergehenden Ansprüche, **dadurch gekennzeichnet, dass** das Grenzflächenmaterial (4) ein Elastizitätsmodul von >= 0,2 GPa und eine Zugfestigkeit von >= 10MPa aufweist.

8. Verfahren nach Anspruch 7 **dadurch gekennzeichnet, dass** die wärmehärtbare Matrix ein Epoxidmaterial und das thermoplastische Material aus einem PVB und/oder einem PA12 und/oder einem PC und/oder einem PEI besteht.

9. Verfahren nach einem der vorhergehenden Ansprüche umfassend einen Kalibrierungsschritt, wobei in mindestens einem ersten vordefinierten aktuellen Zustand der Anregung der Spule (12) und in einem zweiten vordefinierten aktuellen Zustand der Kühlung der weiteren Oberfläche (R), die erste Temperatur an der Kontaktfläche (S) und die zweite Temperatur, die für die weitere Oberfläche (R) relevant ist, gespeichert werden und wobei die erste und die zweite Temperatur dem ersten und dem zweiten Zustand zugeordnet sind, wenn die erste Temperatur niedriger ist als die zweite Temperatur und die Fügeteile verbunden werden.

10. Verfahren nach Anspruch 9, **dadurch gekennzeichnet, dass** die ersten Temperaturdaten durch mindestens ein Thermoelement gemessen werden.

**Revendications**

1. Procédé de soudage par induction de deux parties à coller (10, 11) dont au moins l'une comprend un matériau composite électriquement conducteur ayant une matrice thermodurcissable (3) et un matériau d'interface (4) comprenant une couche de matériau thermoplastique définissant une surface de contact (S), la couche de matériau thermoplastique étant jointe à la matrice thermodurcissable (3) durant une étape de pré-soudage par application de pression et de chaleur afin de faciliter la diffusion du matériau thermoplastique dans la matrice thermodurcissable (3) ; le procédé comprenant les étapes consistant à :

- disposer la surface de contact (S) d'une partie à coller (10) sur un matériau thermoplastique de l'autre partie à coller (11) ;
- alimenter une bobine (12) faisant face à une autre surface (R) de l'une des parties à coller (10, 11) de façon à chauffer le matériau d'interface (4) à une première température ;

et **caractérisé en ce qu'**il comprend l'étape consistant à :

- contrôler le refroidissement de l'autre surface (R) de façon que la deuxième température de l'autre surface (R) soit inférieure à la première température pendant que la bobine (12) est alimentée.

2. Procédé selon la revendication 1, **caractérisé en ce que** le matériau thermoplastique a un point de fusion ou de ramollissement (Ts) qui satisfait à la relation qui suit par rapport à la température de durcissement (Tc) de la matrice thermodurcissable (3) :

$$Tc - 40° \leq Ts$$

dans laquelle Tc est la température de durcissement de la matrice thermodurcissable et Ts est le point de fusion ou de ramollissement du matériau thermoplastique.

3. Procédé selon l'une des revendications 1 et 2, **caractérisé en ce qu'**un rapport entre un rayon d'interaction (R0), calculé expérimentalement, et une distance (Ra) dans l'espace Hansen, calculée sur la base des paramètres de solubilité partielle de la matrice thermodurcissable (3) et du matériau thermoplastique, satisfait à la relation suivante :

$$RED = R_a/R_0 > 0,4$$

dans laquelle RED est le rapport, Ra est la distance dans l'espace Hansen et R0 est le rayon d'interaction.

4. Procédé selon l'une quelconque des revendications précédentes, **caractérisé en ce qu'**il comprend en outre l'étape consistant à appliquer, au moyen d'un compacteur (14, 15), une pression dans une première zone de ladite autre surface (R), et **en ce que** l'étape de contrôle du refroidissement comprend l'étape consistant à diriger un courant de gaz de refroidissement vers une deuxième zone de ladite autre surface (R) disposée sur le côté opposé de la première zone par rapport à la bobine (12) dans la direction d'alimentation pendant que le soudage est effectué.

5. Procédé selon l'une quelconque des revendications précédentes, **caractérisé en ce que** l'étape de contrôle du refroidissement comprend l'étape consistant à détecter sans contact la température de surface de ladite autre surface (R) .

6. Procédé selon l'une quelconque des revendications précédentes, **caractérisé en ce que** l'étape d'alimentation est telle que la surface de contact (S) est chauffée à une température non supérieure à la température de transition vitreuse de la matrice durant le soudage.

7. Procédé selon l'une quelconque des revendications précédentes, **caractérisé en ce que** le matériau d'interface (4) a un module d'élasticité $\geq$ 0,2 GPa et une résistance à la traction $\geq$ 10 MPa.

8. Procédé selon la revendication 7, **caractérisé en ce que** la matrice thermodurcissable comprend un matériau époxy et le matériau thermoplastique comprend un PVB et/ou un PA12 et/ou un PC et/ou un PEI.

9. Procédé selon l'une quelconque des revendications précédentes, comprenant une étape d'étalonnage où, dans au moins un premier état de courant prédéfini pour alimenter la bobine (12) et dans un deuxième état de courant prédéfini pour refroidir ladite autre surface (R), la première température au niveau de la surface de contact (S) et la deuxième température concernant ladite autre surface (R) sont mémorisées, et où les première et deuxième températures sont associées aux premier et deuxième états quand la première température est inférieure à la deuxième température si les parties à coller sont jointes.

10. Procédé selon la revendication 9, **caractérisé en ce que** les données de première température sont mesurées par au moins un thermocouple.

FIG. 1

FIG. 2

FIG. 3

FIG. 4

FIG. 5

EP 3 017 931 B1

FIG. 6

FIG. 7

**EP 3 017 931 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011240200 A1
- DE 102012100620 A1

- US 2002113066 A1
- EP 0495655 A1

**Non-patent literature cited in the description**

- **ALAN R. WEDGEWOOD ; PATRICE E. HARDY.** Induction Welding of Thermoset Composite Adherends Using Thermoplastic Interlayers and Susceptors. *28th International SAMPE Technical Conference,* 1996